# EUROPEAN PATENT SPECIFICATION

(11) **EP 4 110 515 B1**
(45) Date of publication and mention of the grant of the patent: **17.04.2024**
(21) Application number: 21705997.1
(22) Date of filing: 23.02.2021
(51) Int. Cl.: B01J 19/12, B01J 19/24, C02F 1/30, C02F 1/32

(54) **POLYGONAL CONTINUOUS FLOW REACTOR FOR PHOTOCHEMICAL PROCESSES**
POLYGONALER DURCHFLUSSREAKTOR FÜR PHOTOCHEMISCHE PROZESSE
RÉACTEUR À DÉBIT CONTINU POLYGONAL POUR PROCÉDÉS PHOTOCHIMIQUES

(30) Priority: 27.02.2020 EP 20159683
(43) Date of publication of application: 04.01.2023
(73) Proprietor: Signify Holding B.V., 5656 AE Eindhoven (NL)
(72) Inventor: BROERSMA, Rémy, Cyrille, 5656 AE Eindhoven (NL); DE BEST, Anna, Wilhelmina, Maria, 5656 AE Eindhoven (NL); JAGT, Hendrik, Johannes, Boudewijn, 5656 AE Eindhoven (NL); JANSEN, Johannes, Martinus, 5656 AE Eindhoven (NL); SWEEGERS, Norbertus, Antonius, Maria, 5656 AE Eindhoven (NL)
(74) Representative: Verweij, Petronella Daniëlle
(86) International application number: PCT/EP2021/054366
(87) International publication number: WO 2021/170545

(56) References cited:
- WO-A1-2018/011550
- WO-A2-2011/057015
- DE-A1-102014 012 217
- US-A1- 2016 017 266

## Description

### FIELD OF THE INVENTION

The invention relates to a photoreactor assembly and a method for treating a fluid with light source radiation.

### BACKGROUND OF THE INVENTION

Reactor systems for photo(chemical) processing a fluid are known in the art. US2016/0017266 for instance describes a photobioreactor for use in treating polluted air and producing biomass that may comprise, at least in part, a generally vertical tube or fluidic pathway, a generally vertical helical tube or fluidic pathway having a light source partially positioned within the helical fluidic pathway, a head cap assembly, and a base assembly. In one example, the light source may be a light emitting diode or a plurality of light emitting diodes (LEDs).

### SUMMARY OF THE INVENTION

Photochemical processing or photochemistry relates to the chemical effect of light. More in general photochemistry refers to a (chemical) reaction caused by absorption of light, especially ultraviolet light (radiation), visible light (radiation) and/or infrared radiation (light). Photochemistry may for instance be used to synthesize specific products. For instance, isomerization reactions or radical reactions may be initiated by light. Other naturally occurring processes that are induced by light are e.g. photosynthesis, or the formation of vitamin D with sunlight. Photochemistry may further e.g. be used to degrade/oxidize pollutants in water or e.g. air. Photochemical reactions may be carried out in a photochemical reactor or "photoreactor".

In most photochemical reactions, the reaction rate is however limited by the penetration of the light in the fluid containing the reactants. The light is absorbed in the fluid through which it travels essentially in correspondence with the Beer-Lambert law. The intensity of the light decreases logarithmically with respect to the travelled length. Reactants further away from the light source may therefore not obtain the required amount of light (energy) and the process may take more time, or e.g. may lead to a lower yield or efficiency.

Furthermore, commonly used light sources in photochemistry are low or medium pressure mercury lamps or fluorescent lamps. In addition to that, some reactions require a very specific wavelength region, and they may even be hampered by light from the source emitted at other wavelengths. In these cases, part of the spectrum, has to be filtered out, leading to a low efficiency and complex reactor design.

In the recent years the output of Light Emitting Diodes (LEDs), both direct LEDs with dominant wavelengths ranging for instance from UVC to IR wavelengths, and phosphor-converted LEDs, has increased drastically, making them interesting candidates for light sources for photochemistry. High fluxes can be obtained from small surfaces, especially if the LEDs can be kept at a low temperature. The size and shape of the LEDs, the specific wavelengths, and desire for cooling, may put extra restraints on the design of photochemical reactor vessels.

Hence, it is an aspect of the invention to provide an alternative photoreactor assembly, which preferably further at least partly obviates one or more of above-described drawbacks. Its further an aspect of the invention to provide an alternative (photochemical) method for treating a fluid with light, which preferably further at least partly obviates one or more of above-described drawbacks. The present invention may have as object to overcome or ameliorate at least one of the disadvantages of the prior art, or to provide a useful alternative.

Therefore, in a first aspect, the invention provides a photoreactor assembly comprising a reactor, wherein the reactor is configured for hosting a fluid to be treated with light source radiation. In embodiments, the light source radiation comprises UV radiation. In further embodiments, the light source radiation (also) comprises visible radiation (or visible light). In further specific embodiments, the light source radiation (also) comprises IR radiation. In specific embodiments, the light source radiation is selected from one or more of UV radiation, visible radiation, and IR radiation. The reactor comprises a reactor wall which is especially (at least partly) transmissive for the light source radiation. In further specific embodiments, the reactor is a tubular reactor. Especially, the reactor wall defines the reactor, especially the tubular reactor. In further embodiments, the tubular reactor is configured in a tubular arrangement. In further embodiments, the photoreactor assembly further comprises a light source arrangement. The light source arrangement especially comprises (a light source, or especially) a plurality of light sources. The light source(s) is/are especially configured to generate the light source radiation. In further embodiments, the reactor wall is configured in a radiation receiving relationship with the (plurality of) light source(s). In specific embodiments, one or more of the tubular arrangement and the light source arrangement has a rotational symmetry. In further specific embodiments, one or more of the tubular arrangement and the light source arrangement defines a polygon.

In a specific embodiment, the invention provides a photoreactor assembly ("assembly") comprising a reactor, wherein the reactor is configured for hosting a fluid to be treated with light source radiation selected from one or more of UV radiation, visible radiation, and IR radiation, wherein the reactor comprises a reactor wall which is transmissive for the light source radiation, wherein (i) the reactor is a tubular reactor, and wherein the reactor wall defines the tubular reactor; (ii) the tubular reactor is configured in a tubular arrangement; (iii) the photoreactor assembly further comprises a light source arrangement comprising a plurality of light sources configured to generate the light source radiation, wherein the reactor wall is configured in a radiation receiving relationship with the plurality of light sources; and especially (iv) one or more of the tubular arrangement and the light source arrangement defines a polygon.

In such photoreactor assembly, operations may be performed at high efficiency, both in terms of light output versus power input of the light source, and in capturing of the light by the reactants. The photoreactor assembly may in embodiments be readily configured for the type of treatment to be carried out and, e.g., light sources may be (easily) replaced by other light sources, for instance for changing the wavelength of the light source radiation. In further specific embodiments, heat generated by the light source may be dissipated easily, allowing high energy input.

The photoreactor may be used for treating a fluid (or a mix of fluids, including mixes comprising a gaseous fluid and a liquid fluid) with light source radiation, such as according to the method described herein. As described above, many photochemical reactions are known, such as dissociation reactions, isomerization or rearrangement reactions, addition reactions and substitution reactions, and, e.g., redox reactions. In embodiments, the (photochemical) reaction comprises a photocatalytic reaction. These photochemical reactions may especially use the energy of the light source radiation to change a quantum state of a system (an atom or a molecule) (that absorbs the energy) to an excited state. In the excited state, the system may successively further react with itself or other systems (atoms, molecules) and/or may initiate a further reaction. In specific embodiments, a rate of the photochemical reaction may be controlled by an added (photo-)catalysts or photosensitizer. The terms "treating", "treated" and the like, used herein, such as in the phrase "treating a fluid with the light source (light)" may especially relate to performing a photochemical reaction on a relevant (especially photosensitive) system (atom or molecule) in the fluid, especially thereby elevating the system (atom, molecule) to a state of higher energy and especially causing the further reaction. In embodiments a photoactive compound may be provided to the fluid prior and/or during the irradiation of the fluid. For instance, a photocatalyst and/or a photosensitizer may be added to start and/or promote/accelerate the photochemical reaction.

Herein, such atom or molecule may further also be named "a (photosensitive) reactant". The term "treating the fluid (with light)" and comparable terms may therefore especially relate to irradiating the fluid with the light source radiation (and reacting the reactant in the fluid). The term "irradiating the fluid" such as in the phrase "irradiating the fluid, with the light source radiation" especially relates to (emitting/radiating light source radiation and) providing the light source radiation (in this respect to the fluid). Hence, herein the terms "providing light source radiation (to the fluid)" and the like and "irradiating (the fluid with) light source radiation" may especially be used interchangeably. Moreover, herein the terms "light" and "radiation" may be used interchangeably, especially in relation to the light source radiation.

The term "fluid" may relate to a plurality of (different) fluids. Further, the fluid may comprise a liquid and/or a gas. The fluid especially comprises the photosensitive reactant (including photocatalyst and/or photosensitizer), especially sensitive to the light source radiation.

When absorbing (light source) radiation (light), energy of a photon may be absorbed. The photon energy may also be indicated as *h*v, wherein h is Planck's constant and v is the photon's frequency. Hence, the amount of energy provided to the atom or molecule may be provided in discrete amounts and is especially a function of the frequency of the light (photon). Furthermore, the excitation of an atom or a molecule to a higher state may also require a specific amount of energy, which preferably is matched with the amount of energy provided by the photon. This may also explain that different photochemical reactions may require light having different wavelength. Therefore, in embodiments, the assembly may be configured to control a wavelength of the light source radiation.

Photochemical reactions may be carried out in the reactor by irradiating fluid in the reactor with the light source radiation. The wall of the reactor may therefore be configured to be transmissive to the light source radiation. The term "transmissive" in the phrase "transmissive to the light source radiation "especially refers to the property of allowing the light source radiation to pass through (the wall). In embodiments, the reactor wall may be translucent for the light source radiation. Yet, in further embodiments, the reactor wall is transparent for the light source radiation. The term "transmissive" not necessarily implies that 100% of the light source radiation provided emitted to the reactor wall may also pass through the wall. In embodiments at least 50% of the light source radiation emitted to the reactor wall may pass through the reactor wall. A relative amount of light source radiation passing through the reactor wall may e.g. depend on the wavelength of the light source radiation.

The reactor wall is in embodiments configured transmissive for UV radiation. In further embodiments, the reactor wall may for instance (also) be configured transmissive for visible radiation. In yet further embodiments, the reactor wall is configured (also) transmissive for IR radiation. The reactor wall is especially configured in a radiation receiving relationship with the plurality of light sources. The term "radiation receiving relationship" relates to being configured such that radiation (light) emitted by the light source may directly or indirectly be provided to the reactor wall. The radiation (light) may substantially travel along a straight line, directly from the light source to the wall and/or the radiation (light) may travel from the light source to the wall via (light/radiation) reflecting elements (reflective for the light source radiation). Additionally, or alternatively, the radiation (light) may travel to the wall via scattering, diffusion, etc.

The term "reactor" especially relates to a (photo)chemical reactor. The term essentially relates to an enclosed (reactor) volume in which the (photochemical) reaction may take place. The reactor comprises a reactor wall especially enclosing the (enclosed) volume. The reactor wall may define the reactor, especially a type of (the) reactor. Basic types of reactors are known to the person skilled in the art and comprise a (stirred) tank reactor and a tubular reactor. The reactor especially comprises a tubular reactor. The tubular reactor may comprise one or more tubes or pipes. The tube may comprise many different types of shapes and dimensions.

The tube may e.g. comprise a (inner) circular cross section. Yet, the tube may in further embodiments comprise a rectangular cross section or, for instance, a hexagonal cross section and/or a polygonal cross section. In specific embodiments, the tube comprises a polygonal cross section. The tube may in further embodiments comprise a cylindrical shape comprising a ring-shaped cross section (annulus). Hence, the tube may in embodiment comprise a double walled tube, especially comprising an outer wall and an inner wall, wherein the outer wall and the inner wall (together) enclose the reactor volume. During operations, a fluid may flow between the inner and the outer wall. The inner and outer wall may especially be configured similar and coaxially with respect to each other. As such, the annulus (in combination with a length of the tube and optionally a total number of tubes) may define the reactor volume. In embodiments, the inner wall and the outer wall may define a polygon. In further embodiments, the tube comprises a single wall enclosing the reactor volume. The latter may herein also be referred to as a single walled tube.

The term "(reactor) wall" may relate to a plurality of (different) reactor walls. The term may e.g. refer to the inner reactor wall and the outer reactor wall described above. The term may further e.g. refer to walls of a plurality of tubes.

The term "similar" in relations to shapes of an element especially means geometrically similar, i.e. one of the shapes may be identical to the other shape after a resize, flip, slide or turn. Similar shapes may be conformal.

The tube may be elongated. A length of the tube may especially be larger than an (inner) width of the tube. A ratio of the length of the tube to the (inner) width of the tube may in embodiments be larger than 5, especially larger than 10. The tube may comprise an (elongated) tube axis. In embodiments, the term "width" (of the tube) may relate to a characteristic (inner) distance (or size) between two opposite sides of the wall of the tube / a width of the annulus (for a double walled tube). Yet, in further embodiments (comprising a single walled tube), the term may relate to an (inner) width or an (inner) height of the tube (especially a (longest) distance between two opposite positions at the single wall of the tube, especially only a line perpendicular to the tube axis). The term may e.g. refer to an inner diameter of the tube (for a circular cross sections).

The term "annulus" may relate to a circular annulus as well as to a polygonal, such as a square, annulus (or any other geometry of a cross sectional area defined between the inner and the outer wall).

Further, the tube especially comprises an inlet opening and an outlet opening, arranged at extremes of the tube (and defining the length of the tube). A fluid flow provided at the inlet opening may especially exit the tube at the outlet opening. During operations a fluid may flow from the inlet opening to the outlet opening in "a flow direction" or " a direction of flow". The tube axis is especially (locally) configured parallel to the flow direction. Further, the tube especially does not comprise fluid flow restrictions in the tube. The tube is in embodiments configured for allowing a constant fluid velocity along the length of the tube. The tube may in embodiments comprise a (substantially) constant inner cross sectional area (or flow through cross sectional area).

The term "a tube" especially refers to "a pipe", "a channel", "an elongated (open) vessel", "tubing:", "piping", etc. that may hold the fluid, and especially in which the fluid may be transported. Hence, also terms like "tubing", "pipe", "piping", "channel", etc. may be used to refer to the tube. Further, the term "tube" may in embodiments refer to a plurality of tubes.

In specific embodiments, the tubular reactor comprises a plurality of tubes. The tubes are especially arranged parallel to each other. Hence, the tubular arrangement may in embodiments comprise a plurality of tubes. In embodiments, a tubular arrangement axis is especially configured parallel to the tube axis (such as of one or of the plurality of tubes). In further embodiments, the tubular arrangement may especially have a rotational symmetry (especially around the tubular arrangement axis). The tubular arrangement may in embodiments define a circle or e.g. an ellipse. In further embodiments, the tubular arrangement may define a polygon (see also below). A double walled tube may, e.g., be configured to define one or more of the polygons or a circle (or an ellipse) described above. The tube may in specific embodiments comprise a plurality of (rectangular) panels or wall elements defining the wall. For instance, in an embodiment the inner wall comprises four panels or wall elements (defining the inner wall) and the outer wall comprises four panels/wall elements. These wall elements/panels may be arranged to provide a double walled rectangular (square) tube especially having a rectangular (square) annulus between the inner and the outer wall. Together, these (eight) wall elements/panels may therefore define the tube, wherein the tubular arrangement defines a rectangle (square). It will be understood that a cylindrical tube, and tubes having other (polygonal) shapes may be configured likewise. In alternative embodiments, the double walled tube may be substituted by a plurality of (parallel arranged) tubes. In the latter embodiments, as well as in the embodiment comprising the double walled tube, the tubular arrangement axis is especially configured parallel to the tube axis. In further embodiments, (especially comprising a plurality of tubes) the tubes may be arranged traverse with respect to the tubular arrangement axis. The tubes may partly curve around the tubular arrangement axis (see also below). Especially, (overall) a component of the tube axis (that is) arranged parallel to the tubular arrangement axis is larger than a component of the tube axis (that is) arranged perpendicular to the tubular arrangement.

Hence, in embodiments, the tubular arrangement axis may be arranged parallel to the tube axis (yet especially in agreement with a direction of flow through the tube). The tubular arrangement may be configured in a straight tubular arrangement. In embodiments, the tubular arrangement comprises a straight tubular arrangement, especially wherein a first component of the tube axis (that is) configured parallel to the tubular arrangement axis is larger than a second component of the tube axis (that is) configured perpendicular to the tubular arrangement.

In specific embodiments, the tubular reactor comprises an inner reactor wall and an outer reactor wall, together defining the tubular reactor, wherein one or more of the inner reactor wall and the outer reactor wall is transmissive for the light source radiation, and wherein the tubular arrangement comprises a straight tubular arrangement.

In further embodiments, the tube may be bent, curved, or e.g. folded. Moreover, a direction of the (elongated) tube axis may change along a length of the tube. The flow direction along the tube may change correspondingly. The tube may e.g. be coiled. Such bends, curves, or folds may especially be configured to (locally) (substantially) not obstruct a possible fluid flow through the tube.

The tubular reactor may be spiraled. The tube may have a shape like a corkscrew. In further embodiments, the shape of the tubular reactor corresponds to a circular helix (having a constant radius with respect to the tubular arrangement axis). The tube may especially be coiled. The coiled tube may comprise a single turn or winding. The coil may in embodiments comprise less than a single turn. Yet, the coiled tube especially comprises a plurality of turns, windings.

The tube may e.g. comprise at least 10 windings or turns, especially at least 20 windings, such as at least 50 windings. In embodiments, the tube comprises 2-200, especially 5-100, even more especially 10-75 windings or turns. The windings or turns are especially (all) configured aligned with each other. As such, the coil or spiral may comprise a monolayer of windings or turns (especially with respect to the tubular arrangement axis). The windings or turns may in further embodiments define a face of the (coiled) tubular reactor (or the tubular arrangement. In further embodiments the windings or turns may define two opposite faces of the tubular reactor. The faces are especially configured in a radiation receiving relationship with the light sources.

It will be understood that intermediate configurations between substantially straight tubes and coiled tubes are also part of this invention. In embodiments, e.g., the tubular reactor comprises a (plurality of) coiled tube(s) comprising less than one turn, such as half of a turn or only a quarter of a turn. Such configurations may be comprised by the coiled tubular arrangement and/or the straight tubular arrangement.

In further specific embodiments, a distance between successive windings or turns of the spiral (coil) may be minimized. In embodiments, successive windings (turns) of the coil may be arranged contacting each other substantially along a complete winding (turn). The pitch of the spiral or coil may in embodiments substantially equal a characteristic outer size of the tube. In further embodiments, the pitch may be equal to or less than 10 times the outer size of the tube, such as equal to or less than 5 times the outer size of the tube. The pitch may in embodiment e.g. be substantially 2 times the characteristic outer size (especially leaving space for a further, especially parallel arranged, tube). Yet, the pitch may in embodiments be larger than 10, such as 50 or 100 times the characteristic outer size. The term "pitch" is known to the person skilled in the art and especially refers to a shortest distance between centers (tube axes) of two adjacent windings or turns.

The term "characteristic outer size" especially relates to a largest distance from a first location of the tube (reactor) wall to a second location of the tube (reactor) along a line perpendicular to the tube axis. For a circular tube, the outer size equals the outer diameter. For a square or rectangular tube, the outer size may refer to the outer height or outer width of the tube.

The tubular arrangement comprises a coiled arrangement. The tubular reactor is configured in a coiled tubular arrangement. In a coiled tubular arrangement, the tubular arrangement axis may especially not be configured parallel to the tube axis. The tubular arrangement axis may in embodiments be arranged substantially transverse to the (elongated) tube axis. The (elongated) tube axis and the tubular arrangement axis may e.g. define an angle in the range of 45-135°, such as in the range of 60-120°, especially in the range of 80-100°, even more especially 90± 5°. The tubular reactor especially comprises a (coiled) tube. In specific embodiments, the tubular reactor is helically coiled.

In a specific embodiment, the invention provides a photoreactor assembly ("assembly") comprising a reactor, wherein the reactor is configured for hosting a fluid to be treated with light source radiation selected from one or more of UV radiation, visible radiation, and IR radiation, wherein the reactor comprises a reactor wall which is transmissive for the light source radiation, wherein (i) the reactor is a tubular reactor, and wherein the reactor wall defines the tubular reactor; (ii) the tubular reactor is configured in a coiled tubular arrangement (especially with a tubular arrangement axis (A1)), especially wherein the tubular reactor is helically coiled; (iii) the photoreactor assembly further comprises a light source arrangement comprising a plurality of light sources configured to generate the light source radiation, wherein the reactor wall is configured in a radiation receiving relationship with the plurality of light sources; and especially (iv) one or more of the coiled tubular arrangement and the light source arrangement defines a polygon.

The tube is (at least partly) transmissive for the light source radiation and especially the radiation provided to the tube may pass the tube wall unhampered. In embodiments, the tube is made of glass. The tube may e.g. be made of quartz, borosilicate glass, soda-lime(-silica), high-silica high temperature glass, aluminosilicate glass, or soda-barium soft glass (or sodium barium glass) (PH160 glass). The glass may, e.g. marketed as Vycor, Corex, or Pyrex. The tube is in embodiments (at least partly) made of amorphous silica, for instance known as fused silica, fused quartz, quartz glass, or quartz. The tube may in further embodiments at least partly be made of a (transmissive) polymer. Suitable polymers are e.g. poly(methyl methacrylate) (PMMA), silicone/polysiloxane, polydimethylsiloxane (PDMS), perfluoroalkoxy alkanes (PFA), and fluorinated ethylene propylene (FEP). The tube may further comprise a transmissive ceramic material. Examples of transmissive ceramics are e.g. alumina Al₂O₃, yttria alumina garnet (YAG), and spinel, such as magnesium aluminate spinel (MgAl₂O₄) and aluminium oxynitride spinel (Al₂₃O₂₇N₅). In embodiment, e.g. the tube is (at least partly) made of one of these ceramics. In yet further embodiments, the tube may comprise (be made of) transmissive materials such as BaF₂, CaF₂ and MgF₂. The material of the tube may further be selected based on the fluid to be treated. The material may especially be selected for being inert for the (compounds in) the fluid.

Preferably, the light provided to the tube may penetrate substantially all fluid in the tube and the tube may especially have an inner characteristic size, such as a diameter or an inner width or height smaller than 10 mm, especially smaller than 8 mm, such as smaller than 5 mm. The characteristic size may in embodiments be at least 0.1 mm, such as 0.2 mm, especially at least 0.5 mm. In further embodiments, Hence, in embodiments, the tube comprises an inner cross-sectional area selected from the range of 0.01-80 mm², especially from the range of 0.45-2 mm².

Herein, the term polygon is used, especially in in relation to different arrangements and shapes. A polygon is essentially a two-dimensional figure that is described by a finite number of straight line segments named edges or sides. Herein the term "polygon" may especially refer to a convex polygon. Further, the polygon especially comprises a regular polygon. The polygon may e.g. be a square, a pentagon, a hexagon, a heptagon, an octagon, a nonagon, a decagon, etc., etc.. The polygon may in embodiments comprise an n-gon, especially wherein *n* is at least 3, such as at least 4. In embodiments *n* is equal to or smaller than 50, especially equal to or smaller than 20, such as equal to or smaller than 12, especially equal to or smaller than 10, such as 4≤*n*≤10. An n-gon comprises n edges or sides. Hence, the polygon(s) described herein may also especially comprise a number of edges equal to *n.*

Furthermore, phrases like "one or more of the elements define a polygon" may especially indicate that an outline, perimeter, contour or periphery of a cross section of the element defines the polygon. The outline, perimeter, contour, or periphery not necessary comprises all straight edges. Especially, the polygon that substantially corresponds to the contours may be pictured around the element (defining the polygon). For instance, at least 90% of the area of the polygon may correspond to the respective cross section of the element. Furthermore, in embodiments, the edges of the polygon may be straight, however, the corners of the element may be rounded. Yet, in further embodiments the edges many be slightly curved.

The reactor, especially the tube, may in embodiments be configured self-standing. Additionally, or alternatively, the reactor, especially the tube, may be configured between (further) structural elements of the photoreactor assembly. The photoreactor assembly may further comprise a reactor support element ("support element") configured to support the reactor. In embodiments, the reactor support element may comprise a plurality of (light source) light transmissive panels enclosing the reactor (the tube). A (bent, curved, folded, etc.) tube may be configured between a set of such panels. The Light transmissive panel may e.g. comprise materials described in relation to the transmissive tube. In such embodiment, the cross section of the tube may have a more or less impressed or flattened shape. The reactor support element may in further embodiments comprise a support frame. The reactor support element may comprise one or more pillars (configured for supporting the reactor). In embodiments, the tubular reactor may be connected to one or more pillars. The tubular reactor may in further embodiments be coiled around one or more pillars (see below).

The reactor support element may especially comprise a support body. The term "support body" may relate to a plurality of (different) support bodies. The term may further relate to a plurality of (different) support elements together defining the support body. For instance, a plurality of support pillars may define the support body. In specific further embodiments, the support body has a rotational symmetry. The support body may, e.g., comprise a cylindrical shape or define an elongated body with a polygonal shape (or cross section). In embodiments, the tubular reactor is coiled around the support body (see also below). Additionally, or alternatively, the tubular reactor may be enclosed by the support body. The reactor may especially be supported and contacted by the support body. Especially, at least part of the tubular reactor is configured in contact, especially thermal contact, with the support body. The support body may be configured for dissipating heat from the reactor/cooling at least parts of the assembly (see also below). The support body may in further embodiments comprise one or more thermally conductive elements and/or be in thermal contact with one or more thermally conductive elements (see further below). The reactor support element, especially the support body, may be substantially solid and may for instance comprise a heat sink. Additionally, or alternatively, the reactor support element, especially the support body, may be a (hollow) body comprising one or more (cooling) fluid transport channels (see below). The support body may especially comprise a support body axis, especially configured parallel to the tubular arrangement axis. The one or more (cooling) channels are in embodiments configured parallel to the support body axis. The one or more fluid transport channels may in embodiment extend from a first end of the support body axis to an opposite end of the support body (along the support body axis). In further embodiments, extremes of the one or more fluid transport channels may be configured at the same end or side of the support body. Additionally or alternatively, the support element, especially the support body, may comprise a cavity e.g. for hosting a cooling fluid.

Hence, in embodiments, the photoreactor assembly further comprises a reactor support element configured to support the reactor, wherein the reactor support element comprises a support body, wherein at least part of the tubular reactor is configured in thermal contact with the support body and wherein one or more thermally conductive elements are comprised by the support body or are in thermal contact with the support body.

The term "thermally conductive element" may especially relate to any element that may conduct heat. The thermally conductive element especially comprises or is made of thermally conductive material. The thermally conductive material may e.g. have a thermal conductivity of at least 10 W/mK, such as at least 50 W/mK, especially at least 100 W/mK. The thermally conductive material may comprise a metal, such as copper, aluminum, steel, iron, silver, lead an alloy of one or more (of these) metals. The thermally conductive element may in embodiments comprise a layer or a coating arranged configured at or being part of the element comprising the thermally conductive element. In further embodiments, the element comprising the thermally conductive element may be configured thermally conductive, and especially may be made of the thermally conductive material. In further embodiments, the element comprising the thermally conductive element may function as a heat sink or heat spreader. In yet further embodiments, the thermally conductive element comprises a (dedicated) heatsink, e.g., comprising fins or other elements to increase a contact area between the heatsink and a cooling medium. The thermally conductive element may facilitate a transport of heat generated in the reactor assembly from relatively warmer to relatively cooler locations, and especially to a location external from the reactor assembly. In the reactor assembly, heat may be generated by the light sources and, e.g. be provided to the reactor, especially via irradiation. Heat may especially be transported via the thermally conductive elements away from the to light sources and the reactor to a cooling fluid (see below).

In embodiments, the reactor support element, especially the support body, at least partly, comprises (or is made of) thermally conductive material. In further embodiments (at least part of) the reactor support element, especially the support body, is transmissive for the light source radiation.

Herein the term "reactor support element" may refer to a plurality of (different) reactor support elements. Likewise, the term "support body" may relate to more than one support body. The reactor support element essentially supports the (tubular) reactor and may prevent the reactor from collapsing. In specific embodiments, a plurality of tube windings or turns are configured around the tube support element. The tube may especially be helically coiled around (or within) the reactor support element.

The reactor support element may comprise a cylindrical support body. Such cylinder may allow easy winding of the tube around the support element. In further embodiments, the support body comprises an elongated body with a polygonal shape. The tubular reactor may especially be coiled around the elongated body with the polygonal shape. The elongated body with polygonal shape (support body) may in embodiments have rounded corners (see also above with respect to polygon). In further embodiments, the tube is configured loosely around the corners to avoid deformation and/or breaking of the tube

The support element, especially the support body, may in embodiments define the (coiled) tubular arrangement.

The plurality of light sources may especially be configured for providing a high intensity light source radiation. In the light source radiations may further be configured for irradiating (emitting) one or more of UV radiation, visible radiation, and IR radiation.

The term " UV radiation" is known to the person skilled in the art and relates to "ultraviolet radiation", or "ultraviolet emission", or "ultraviolet light", especially having one or more wavelengths in the range of about 10-400 nm, or 10-380 nm. In embodiments, UV radiation may especially have one or more wavelength in the range of about 100-400 nm, or 100-380 nm. Moreover, the term "UV radiation" and similar terms may also refer to one or more wavelength in the range of about 315-400 nm. UVB irradiation may especially refer to having one or more wavelength in the range of about 280-315 nm. UVC irradiation may further especially have one or more wavelength in the range of about 100-280 nm.

The terms "visible", "visible light", "visible emission", or "visible radiation" and similar terms refer to light having one or more wavelengths in the range of about 380-780 nm.

The term "IR radiation" especially relates to "infrared radiation", " infrared emission", or "infrared light", especially having one or more wavelengths in the range of 780 nm to 1 mm. Moreover, the term "IR radiation" and similar terms may also refer to one or more of NIR, SWIR, MWIR, LWIR, FIR radiation. NIR may especially relate to Near-Infrared radiation having one or more wavelength in the range of about 750-1400 nm. SWIR may especially relate to Short-wavelength infrared having one or more wavelength in the range of about 1400-3000 nm. MWIR may especially relate to Mid-wavelength infrared having one or more wavelength in the range of about 3000-8000 nm. LWIR may especially relate to Long-wavelength infrared having one or more wavelength in the range of about 8-15 µm. FIR may especially relate to Far infrared having one or more wavelength in the range of about 15-1000 µm.

In embodiments (at least part of) the plurality of light sources comprise Light emitting diodes (LEDs), especially an array of Light emitting diodes. The term "array" may especially refer to a plurality of (different) arrays. In further embodiments (at least part of) the plurality of light source comprise Chips-on-Board light sources (COB). The term "COB" especially refers to LED chips in the form of a semiconductor chip that is neither encased nor connected but directly mounted onto a substrate, such as a Printed Circuit Board. The COB and/or LED may in embodiments comprise a direct LED (with dominant wavelengths ranging for instance from UVC to IR wavelengths) In further embodiments, the COB and/or LED comprises one or more phosphor-converted LEDs. Using such light sources, high intensity radiations (light) may be provided per light source or per light source element (see below). In embodiments, e.g., the light sources may provide 100-25,000 lumen (visible light) per light source. In embodiments, the light sources may e.g. apply (consume) 0.5-500 (electrical) Watts per light source (input power).

The plurality of light sources comprises Chips-on-Board light sources (COB) and/or an array of Light emitting diodes (LEDs).

The plurality of light sources is configured for providing the light source radiation to the fluid in the reactor during operations. In specific embodiments, the light source arrangement is configured in correspondence with the tubular arrangement. The light source arrangement may especially (also) have a rotational symmetry. The light source arrangement may in embodiments define a circle or e.g. an ellipse. In further embodiments, the light source arrangement may define a polygon. In further embodiments, the (coiled) tubular arrangement and the light source arrangement both define polygons, especially having mutually parallel configured polygon edges. The polygons may in embodiments each comprise 3-16, especially 4-10 polygon edges (see further below). The tubular arrangement and the light source arrangement both define polygons having mutually parallel configured polygon sides. Thus, the polygons may in embodiments each comprise 3-16, especially 4-10 polygon sides. In embodiments, the polygon sides (of the tubular arrangement and/or the light source arrangement) may have a surface area (or face) which is preferably at least 10 cm^2, more preferably at least 50 cm^2, most preferably at least 100 cm^2. In embodiments, the faces of the tubular arrangement and the light source arrangement are preferably arranged parallel. In embodiments, the faces of the tubular arrangement and the light source arrangement are preferably arranged conformal. In embodiments, the faces of the tubular arrangement and the light source arrangement have (approximately) the same size and/or shape. For example, the tubular arrangement may comprises N faces and the light source arrangement comprises M faces. Preferably N is in the range from 4-10 and M is in the range from 4 -10. Preferably (neighboring M and N faces are parallel and/or conformal arranged. By using abovementioned embodiments operations may be performed at high efficiency, both in terms of light output versus power input of the light source, and in capturing of the light by the reactants. The photoreactor assembly may in embodiments be readily configured for the type of treatment to be carried out and, e.g., light sources may be (easily) replaced by other light sources, for instance for changing the wavelength of the light source radiation. In further specific embodiments, heat generated by the light source may be dissipated easily, allowing high energy input. If the tubular arrangement and the light source arrangement both define polygons having mutually parallel configured polygon sides (or faces) the tubular arrangement may better match the light source arranged. Especially if (arrays) of solid state light sources such as LEDs are used, because these type of light sources i.e. (arrays) of solid state light sources are typically flat. Light of such a light source arrangement can be better coupled in / more efficient being used for photochemical reactions.

The light source arrangement may especially have a light arrangement axis, configured parallel to the tubular arrangement axis.

The plurality of light sources may be configured enclosing the tubular arrangement (and as such may all face in a direction of the tubular arrangement axis). In further embodiments, the plurality of light sources are enclosed by the tubular arrangement (and may all face away from the tubular arrangement axis). Yet, in further embodiments, a part of the light sources enclose the tubular arrangement and another part is enclosed by the tubular arrangement. Hence, in embodiments at least a first subset of the plurality of light sources enclose the (coiled) tubular arrangement. Additionally, or alternatively at least a second subset of the plurality of light sources are enclosed by the (coiled) tubular arrangement.

In specific embodiments, a first subset of the plurality of light sources enclose the (coiled) tubular arrangement, thereby defining an outer light source polygon, and especially a second subset of the plurality of light sources are enclosed by the (coiled) tubular arrangement, thereby defining an inner light source polygon.

In specific embodiments, the photoreactor assembly further comprises a light escape face arrangement comprising light escape faces of the plurality of light sources, especially wherein each light escape face is perpendicular to an optical axis of the respective light source. In further embodiments, the (coiled) tubular arrangement defines a first polygon and the light escape face arrangement defines a second polygon, especially wherein each polygon edge of the first polygon is configured parallel to a corresponding polygon edge of the second polygon. Especially, the first polygon and the second polygon are (substantially) similar.

In yet further embodiments, the light escape face arrangement defines (i) an inner second polygon enclosed by the first polygon and (ii) an outer second polygon, enclosing the first polygon, and especially each polygon edge of the first polygon is configured parallel to a corresponding polygon edge of the inner second polygon and (configured parallel) to a corresponding polygon edge of the outer second polygon.

During operations, the plurality of light sources may generate radiation. The light sources may further generate heat. The assembly may especially be configured to conduct/guide heat generated by the light source away from the light source. In embodiments, the photoreactor assembly comprises one or more thermally conductive elements configured in thermal contact with the one or more light sources.

In further embodiments, the light sources may be comprised by a plurality of light source elements and especially the light source elements are configured for moving/guiding the heat away from the light sources. The light source element may in embodiments comprise one or more thermally conductive element configured in thermal contact with at least one of the light sources comprised by the light source elements.

Hence, in embodiments, the photoreactor assembly comprises a number of light source elements wherein each light source element comprises one or more of the plurality of light sources, and especially wherein each of the light source elements comprises at least one thermally conductive element configured in thermal contact with the light source (comprised by the light source elements. The thermally conductive element may especially at least partly comprise (or be made of) a thermally conductive material, such as described herein. In further embodiments, the light source element is a thermally conductive element.

The light source element may further comprises a reflective element at a surface of the light source element facing (in a direction of the) the reactor wall. The reflective element is especially reflective for the light source radiation. The reflective element may comprise a (reflective) coating. In further embodiments, the surface of the light source element is reflective. The (surface) of the reflective element may e.g. comprise a metal being reflective for the light source radiation. In embodiments the thermally conductive element comprise the reflective element. In further embodiment, the surface of the thermally conductive element many be reflective.

Additionally, or alternatively the photoreactor assembly may further comprises a wall enclosing the tubular reactor and the light source elements, especially wherein the wall (also) comprises a reflective element as described in relation to the light source element). The wall may e.g. comprise a reflective coating and/or a reflective surface facing the tubular reactor, wherein the reflective surface is reflective for the light source radiation.

In embodiments, the number of edges of the polygon equals (a total) number of light source elements. Yet, in further embodiments, the number of edges may be equal to twice the (total) the number of edges. For instance in embodiments, wherein the light sources are configured to generate the light source radiation in a single one of the directions selected from the direction towards the tubular arrangement axis and the direction away from the tubular arrangement axis the number of edges may equal the number of light source elements. The number of edges times two may especially equal the number of light source elements in embodiments wherein the light sources are configured to generate the light source radiation in the direction of the tubular arrangement axis as well as in the direction away from the tubular arrangement.

The light source element may especially comprise a flat (reflective) face. Yet in other embodiments, the face may be curved. The light source elements may especially be rectangular. In further embodiments, the light source elements are arranged at an angle with each other. In embodiments, (at least part of) the light source elements are physically connected to each other, for instance in a light source unit. Yet, in other embodiments, the light source elements are single elements, and, especially when configured in the photoreactor assembly, together define the light source unit.

In specific embodiments, the light source elements (together) define a polygon having the same symmetry as the polygon defined by one or more of the tubular arrangement and the light source arrangement.

The light source elements and/or the light source unit may in specific embodiments be configured exchangeable with other light source elements / light source units, e.g. if another wavelength of the light source radiation is required (or e.g. to replace the light source).

Hence, in further embodiments the photoreactor assembly further comprises light source element receiving elements, wherein the light source element receiving elements are configured to removably house the light source elements. Likewise, the photoreactor assembly may (also) comprise a light source unit receiving unit, wherein the light source unit receiving unit is configured to removably house the light source unit.

As discussed above, during operations heat may be produced by the light sources and heat may be provided to the reactor. To improve the efficiency, at least parts of the photoreactor assembly may be cooled. Herein the term "cooling" may relate to passive cooling and/or active cooling. The photoreactor assembly may (further) comprise a cooling element (for active and/or passive cooling). The cooling element may in embodiments comprise a (cooling) fluid transport channel. In further embodiments, the cooling element may (also) comprise a thermally conductive elements. The cooling element may especially be configured for cooling the reactor and/or a light source. Hence, the cooling element is especially configured in thermal contact with the reactor and/or one or more of the plurality of light sources.

The term "(cooling) fluid transport channel" especially relates to a channel/path configured in the photoreactor assembly which may hold a (cooling) fluid, especially through which a fluid may flow (such as by a forced transport or spontaneously) The cooling fluid may be a gaseous cooling fluid, such as air. The cooling fluid may also be a (cooling) liquid. The cooling fluid may be further be known as "a coolant". The cooling fluid may be water.

The terms "cooling element", "fluid transport channel" and "thermally conductive element" may especially relate to a plurality of cooling elements, fluid transport channels and thermally conductive elements, respectively.

Hence, in further embodiments, the photoreactor assembly comprises one or more cooling elements, wherein the one or more cooling elements comprise one or more of (i) one or more (cooling) fluid transport channels and (ii) one or more thermally conductive elements, wherein the one or more cooling elements are in thermal contact with one or more of (a) the reactor and (b) one or more of the light sources. In embodiments, one or more fluid transport channels are configured in one or more of the thermally conductive elements.

In further embodiments, the tubular reactor and the light source elements define one or more (cooling) fluid transport channels between the tubular reactor and (the faces of) the light source elements. In such embodiment, especially a fluid transport channel width (d) may be defined by a minimal distance between the tubular reactor and the light source elements. The fluid transport channel width may typically be less than 4 cm, especially less than 2 cm, such as less than 1 cm, such as equal to or less than 5 mm. The transport channel width may be at least 0.2 mm, such as at least 0.5 mm, especially at least 1 mm, or even at least 2 mm. In embodiments the fluid transport channel width (d) is selected from the range of 0.2-40 mm, such as 0.5-20 mm, especially 0.5-10 mm, or 1-5 mm. In further embodiments, (see before) the support body may be comprising one or more (cooling) fluid transport channels. In such embodiment, especially the fluid transport channel width (d) may be defined by a (internal) diameter or width of the channel. As such, the fluid transport channel width may in embodiments (also) be in the range of 0.5-10 cm, such as 5-10 cm or, e.g., 0.5-2 cm.

In embodiments, the thermally conductive element comprises a heat sink, especially comprising one or more fins (or ribs). In embodiments, the reactor support element, especially the reactor support body, comprises fins. In further specific elements, the light source element may comprise a heat sink. The light source may in embodiments be connected to, especially mounted at, the heat sink. The heat sink may have a reflective surface providing the face of the light source element. A thermally conductive element such as heat sink may be passively cooled. Yet, in embodiments, a cooling fluid may be forced along the thermally conductive element to actively cool it. The cooling fluid may additionally or alternatively be forced through a cooling fluid transport channel configured in the thermally conductive element (to actively cool it).

In embodiments, the photoreactor assembly further comprises an air transporting device, such as a fan. The air transporting device may especially be configured facing a thermally conductive element. In embodiments, the air transporting device is configured to transport air along (and/or through) one or more of the thermally conductive elements, such as along (and/or through) one or more of the heat sinks. The air transporting device may further be configured for transporting air through one or more of the cooling fluid transport channels. The term "air transporting device" may especially relate to a plurality of air transporting devices.

Hence, in further embodiments, the photoreactor assembly further comprises a cooling system configured for transporting a cooling fluid through and/or along one or more of the one or more cooling elements. The cooling system may e.g. comprise the air transporting device (wherein the cooling fluid comprises air). Additionally, or alternatively the cooling system may comprise a liquid transport device, such as a pump configured to pump a liquid (wherein the cooling fluid comprises a liquid). In embodiments, the liquid transport device is configured for providing a liquid cooling fluid to one or more of the (cooling) fluid transport channels.

In a further aspect, the invention provides a method for treating a fluid with light source radiation. The method especially comprises (i) providing the photoreactor assembly described herein, (ii) providing the fluid to be treated with the light source radiation in the reactor; and (iii) (providing light source radiation to the reactor and) irradiating the fluid with the light source radiation.

Irradiating the fluid with the light source radiation may induce the photochemical reaction. In embodiment, the (photochemical) reaction comprises a photocatalytic reaction. In embodiments, the method further comprises providing a photocatalyst and or photosensitizer to the fluid prior to and/or during irradiating the fluid with the light source radiation.

In embodiments, the method comprises a batch process. In other embodiments, the method comprises a continuous process. Hence, in specific embodiments, the method comprises transporting the fluid through the reactor while irradiating the fluid with the light source radiation.

In further embodiments (the photoreactor assembly comprises one or more cooling elements (described herein) and), the method further comprises transporting a cooling fluid through and/or along one or more cooling elements.

In yet further embodiments, the method comprises selecting the light source radiation from one or more of UV radiation, visible radiation, and IR radiation, prior to irradiating the fluid with the light source radiation. The light source radiation may especially be selected by selecting the plurality of light sources to generate the (selected) light source radiation. The light source radiation may further be selected based on the fluid to be treated, especially a (photosensitive) reactant and/or photocatalyst and/or photosensitizer in the fluid.

The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

The term "light source" may refer to a semiconductor light-emitting device, such as a light emitting diode (LEDs), a resonant cavity light emitting diode (RCLED), a vertical cavity laser diode (VCSELs), an edge emitting laser, etc. The term "light source" may also refer to an organic light-emitting diode, such as a passive-matrix (PMOLED) or an active-matrix (AMOLED). In a specific embodiment, the light source comprises a solid-state light source (such as a LED or laser diode). In an embodiment, the light source comprises a LED (light emitting diode). The term LED may also refer to a plurality of LEDs. Further, the term "light source" may in embodiments also refer to a so-called chips-on-board (COB) light source. The term "COB" especially refers to LED chips in the form of a semiconductor chip that is neither encased nor connected but directly mounted onto a substrate, such as a PCB and/or a heat sink Hence, a plurality of semiconductor light sources may be configured on the same substrate. In embodiments, a COB is a multi LED chip configured together as a single lighting module. The term "light source" may also relate to a plurality of (essentially identical (or different)) light sources, such as 2-2000 solid state light sources. In embodiments, the light source may comprise one or more micro-optical elements (array of micro lenses) downstream of a single solid state light source, such as a LED, or downstream of a plurality of solid state light sources (i.e. e.g. shared by multiple LEDs). In embodiments, the light source may comprise a LED with on-chip optics. In embodiments, the light source comprises a pixelated single LEDs (with or without optics) (offering in embodiments on-chip beam steering).

The phrases "different light sources" or "a plurality of different light sources", and similar phrases, may in embodiments refer to a plurality of solid-state light sources selected from at least two different bins. Likewise, the phrases "identical light sources" or "a plurality of same light sources", and similar phrases, may in embodiments refer to a plurality of solid state light sources selected from the same bin.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs 1A-2B depict some embodiments of the photoreactor assembly;
Figs 3A, 3B and 4 depicts some further aspects of the photoreactor assembly;
Fig. 5 depicts aspects of the cooling system; and
Fig. 6 depicts further aspects of the photoreactor assembly.

The schematic drawings are not necessarily to scale.

### DETAILED DESCRIPTION OF THE EMBODIMENTS

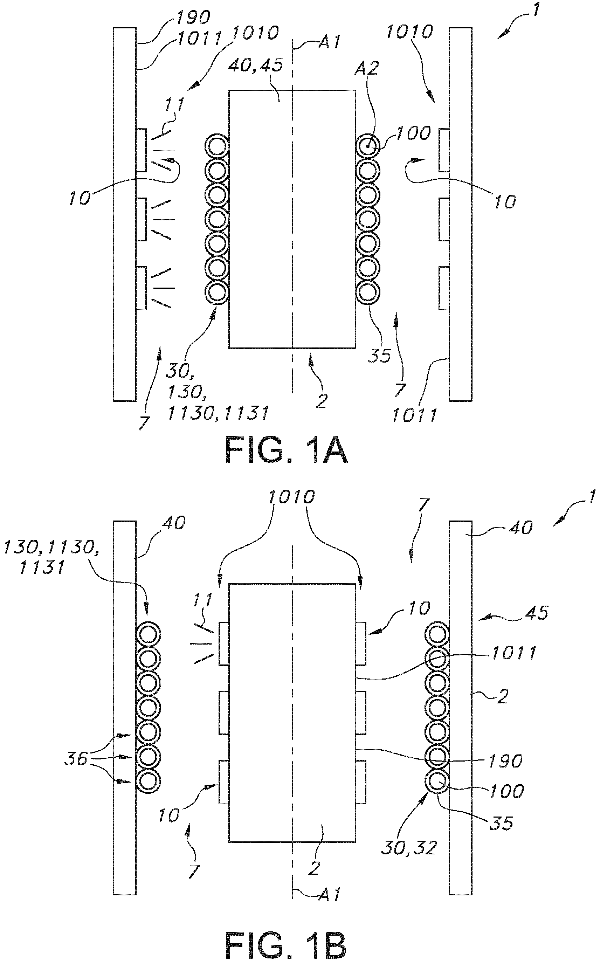

Figs. 1A and 1B schematically depict embodiments of the photoreactor assembly 1. The photoreactor assembly 1 comprises a reactor 30 for hosting a fluid 100 to be treated with light source radiation 11. The light source radiation 11 may especially be selected from the group of UV radiation, visible radiation, and IR radiation. The light sources 10 comprise Chips-on-Board light sources (COB) and/or an array of Light emitting diodes (LEDs). The reactor 30 comprises a reactor wall 35 which is at least partly transmissive for the light source radiation 11. The reactor wall 35 may define the reactor 30. In the depicted embodiment the reactor 30 comprises a tubular reactor 130, especially configured in a tubular arrangement 1130.

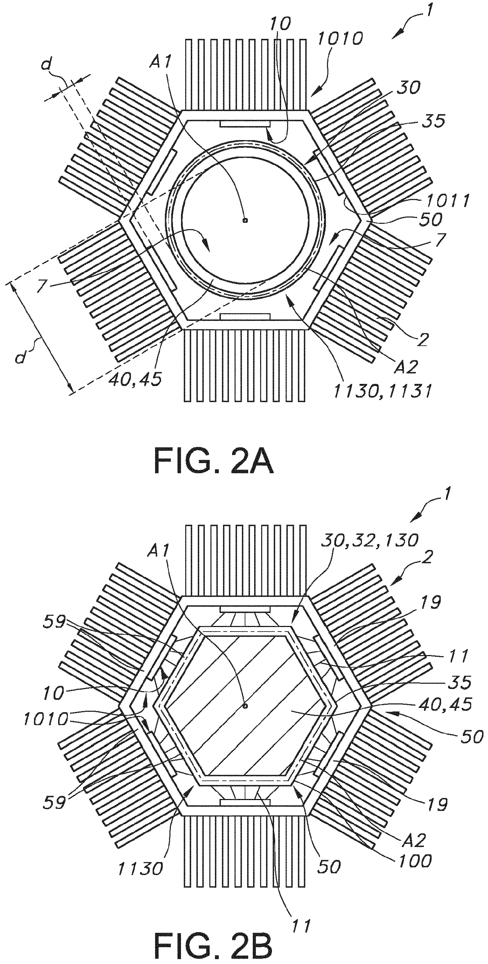

In the embodiment the tubular arrangement 1130 is pictured as a coiled tubular arrangement 1131 (see also Figs 2 showing a top view of a tubular reactor 130 configured in a coiled tubular arrangement 1131). The coiled tubular arrangement 1131 is schematically depicted by the seven windings 36 or turns 36 of the tubular reactor 130 (the turns 36 continue from the left hand side to the right hand side). Figs 1 further illustrate that the tubular reactor 130 is helically coiled.

The photoreactor assembly 1 further comprises a light source arrangement 1010 comprising a plurality of light sources 10 for generating the light source radiation 11. The reactor wall 35 is especially configured in a radiation receiving relationship with the plurality of light sources 10.

Especially, one or more of the tubular arrangement 1130 and the light source arrangement 1010 defines a polygon 50. This is further depicted in Figs 2A and 2B, wherein in the embodiment of Fig. 2A, the light source arrangement 1010 defines the polygon 50, especially a hexagon, and in the embodiment of Fig. 2B, both the light source arrangement 1010 and the tubular arrangement 1130 define the polygon 50. The embodiment of Fig. 2B is an example of an embodiment wherein the tubular arrangement 1130 and the light source arrangement 1010 both define polygons 50 having mutually parallel configured polygon edges 59. The polygons 50 are hexagons and each polygon 50 comprises six polygon edges 59.

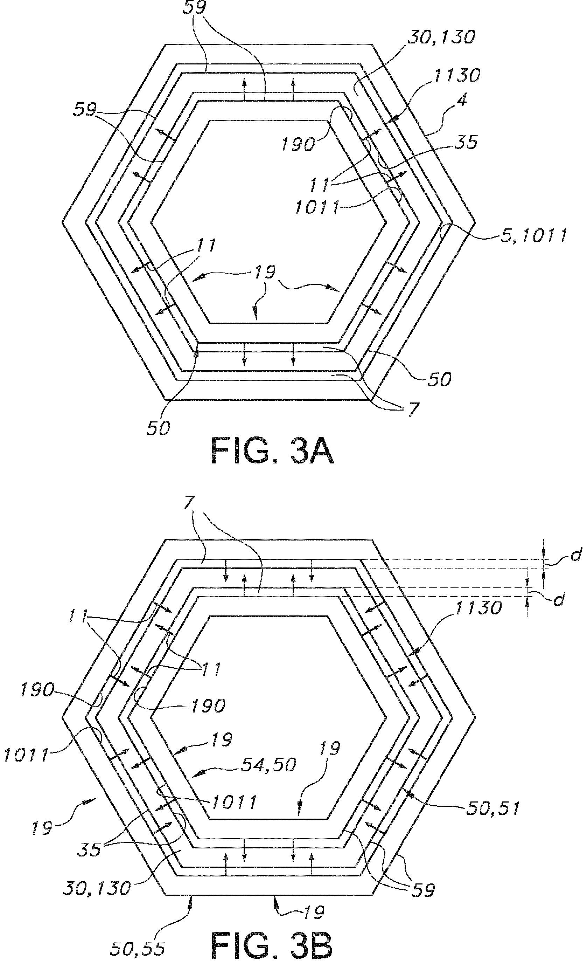

In the embodiment depicted in Fig. 1A, (all of) the plurality of light sources 10 enclose the tubular arrangement 1130. In the embodiment depicted in Fig. 1B (all of) the plurality of light sources 10 are enclosed by the tubular arrangement 1130. Yet, in other embodiments, a first subset of the plurality of light sources 10 encloses the tubular arrangement 1130 and a second subset of the plurality of light sources 10 is enclosed by the tubular arrangement 1130. This is very schematically depicted in Fig. 3B, although the light sources 10 are not shown in the figure. Yet the light source radiation 11 is indicated.

The embodiments depicted in Figs 1 and 2 further comprise a reactor support element 40 to support the reactor 30. The reactor support element 40 comprises a support body 45, which is for the four depicted embodiments rotational symmetrical (around the tubular reactor arrangement axis A1. In the embodiments part of the tubular reactor 130 contacts the support body 45 and is in thermal contact with the support body 45. Such configuration may facilitate dissipation of heat from the tubular reactor 130 to the support body 45, especially if the support body 45 comprises a thermally conductive element 2 or is thermally connected to such thermally conductive elements 2. The thermally conductive element 2 may comprise a heat sink, optionally comprising fins. Such heat sinks (thermally conductive elements 2) are e.g. schematically indicated in Figs 2 in thermal contact with the light sources 10.

Figs 1 and 2, further depict that the tubular arrangement axis A1 and the tube axis A2 are configured almost perpendicular to each other.

In Figs 3A and 3B, some further aspects of embodiments of the assembly 1 are depicted. The figures schematically depict the photoreactor assembly 1 comprising a number of light source elements 19. In Fig. 3A the photoreactor assembly 1 comprises six light source elements 19. In Fig. 3B the photoreactor assembly 1 comprises twelve light source elements 19. Each light source element 19 comprises one or more light sources 10. The light source element 19 may further comprise at least one thermally conductive element 2 configured in thermal contact with the light source 10 (as is depicted in e.g. Fig. 2B). The light source element 19 may further comprise a reflective element 1011 (reflective for the light source radiation 11) at a surface 190 of the light source element 19 facing the reactor wall 35.

In the embodiment in Fig. 3A, the light sources 10 are enclosed by the tubular arrangement 1130. In the figure, the light sources 10 are not shown, yet may be understood from the arrows depicting the light source radiation 11. To prevent light source radiation 11 from escaping from the photoreactor assembly 1, the embodiment of Fig. 3A (also) comprises a wall 4 with a reflective element 1011, especially a reflective surface 5 (facing the tubular reactor 130) enclosing the tubular reactor 130 and the light sources 10. The reflective element 1011/reflective surface 5 is especially reflective for the light source radiation 11. The reflective element 1010/surface 5 may reflect back any radiation that is not absorbed by the fluid. This may further provide an improved light homogeneity over the fluid 100.

In the embodiment of Fig. 3B, the first subset of the of light sources 10 (as indicated by the arrows depicting light source light 11) enclose the tubular arrangement 1130 and the second subset of the light sources 10 are enclosed by the tubular arrangement 1130. In the embodiment, the first subset of the plurality of light sources 10 define an outer light source polygon 50,55 and the second subset of the plurality of light sources 10 define an inner light source polygon 50,54. The tubular arrangement 1130 defines yet a further polygon 50,51. Also in this embodiment, the tubular arrangement 1130 and the light source arrangement 1010 (comprising the two subsets of light sources 10) both define polygons 50, 51, 54, 55 having mutually parallel configured polygon edges 59.

The photoreactor assembly 1 may especially comprise one or more cooling elements 95, e.g., comprising one or more fluid transport channels 7 and/or one or more thermally conductive elements 2. In Fig. 3A and Fig. 3B, fluid transport channels 7 between the tubular reactor 130 and the light source elements 19 are defined by the tubular reactor 130 and the light source elements 19. Furthermore, between the wall 4 and the tubular reactor 130 (also) a fluid transport channel 7 may be defined. Comparable fluid transport channels 7 are depicted in the embodiments of Figs 1 and 2. The fluid transport channel may have a width d, e.g. in the range of 1-5 mm. Yet, in embodiments, see e.g. Fig. 2A wherein a (straight) fluid transport channel 7 is (also) configured, especially as a through opening, in the support body 45, the width d may be larger than 5 cm. In further embodiments, fluid channels 7 may be defined in any of the thermally conductive elements 2, especially having a width d that may be smaller than 5 cm, and e.g. larger than 0.5 cm. For instance in embodiments, a fluid transport channel 7 may be defined in the support body 45 starting at a first side of the body and ending at the same side of the body 45. The fluid transport channels 7 may be used for cooling. In Figs 1-3, the channels 7 are all in thermal contact with the reactor 30 while most of them are also in thermal contact with the light sources 10.

Hence, the reactor support element 40, especially the support body 45, may especially be solid or hollow, especially comprising a cavity and/or a fluid transport channel 7. The reactor support element 40, especially the support body 45, may further comprise a heatsink, especially comprising fins. In embodiments, the reactor support element 40, especially the support body 45, is finned. The reactor support element 40, especially the support body 45, may thus be configured for facilitating a flow of a cooling fluid 91 (e.g. air 91,92 and/or water 91,93 or another cooling liquid 91,93) through and/or along the reactor support element 40.

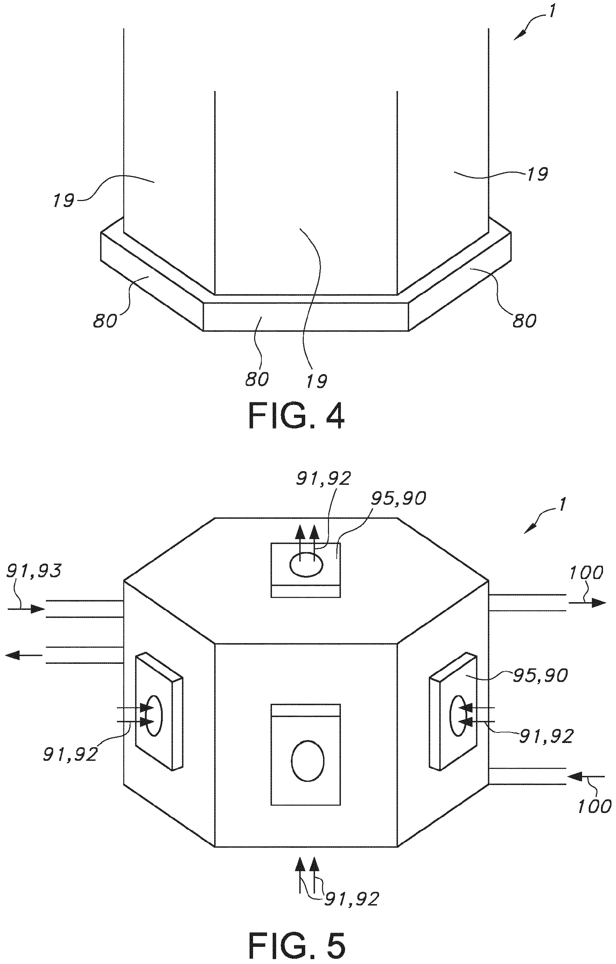

Elements of the cooling system 90 are further depicted in Fig. 5. The cooling system may comprise the cooling elements 95. The cooling system 90 is especially configured for transporting the cooling fluid 91 through and/or along one or more of the one or more cooling elements 95 (especially fluid transport channels 7 and/or thermally conductive elements 2). The cooling system may e.g. comprise an air transporting device 95 for transporting a gaseous fluid 91,92, especially air 91,92 through one or more of the fluid transport channels 7 and along one or more the thermally conductive elements 2. Additionally or alternatively a liquid (cooling) fluid, 91, 93 may be used, and the cooling system may comprise a pump for transporting the liquid cooling fluid 91,93. In the embodiments of Fig. 5, for instance, the photoreactor assembly 1 comprises air transport devices 95, such as fans, configured for transporting air along thermally conductive elements 2 in thermal connection with the light sources 10, such as heat sinks of the light source element 19. Further a pump may be arranged to pump a liquid cooling fluid 91,93 through e.g. some of the fluid transport channels 7. In the embodiment also air 91,92 is transported through one or more of the fluid transport channels 7 via a fan 90,95 arranged at the top of the photoreactor assembly 1.

The light source elements 19 are in embodiments removably housed in the photoreactor assembly 1. The photoreactor assembly 1 may e.g. comprise light source element receiving elements 80 configured for removably housing the light source elements 19, as is very schematically depicted in Fig. 4. In embodiments, every single light source element 19 may be removed separately. Yet, in further embodiments, (at least part of) the light source elements 19 together form a light source unit, and the light source unit(s) may be removably housed in the light source element receiving elements 80. The light source element receiving elements 80 may therefore also define a light source unit receiving unit (for removably housing the light source unit).

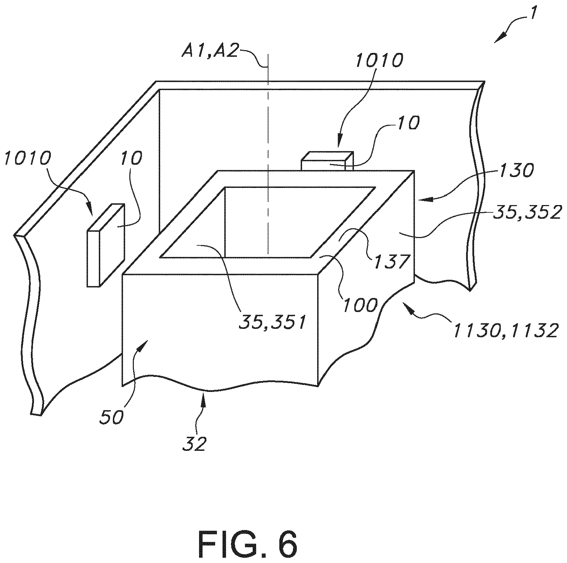

In Fig. 6, aspects of a further embodiment of the photoreactor assembly 1 are depicted. In this embodiment, the reactor wall 35 of the tubular reactor 130 actually comprises an inner reactor wall 351 and an outer reactor wall 352 together defining the tubular reactor 130. Hence, in embodiments, the tube 32 may (also) have an inner wall 351 and an outer wall 352. Herein, such configuration is also called a double walled tube 32. Depending on the configuration of the light source arrangement 1010 (not depicted in the figure) the inner reactor wall 351, the outer reactor wall 352 or both walls 351, 352 are configured at least partly transmissive for the light source radiation 11. In this embodiment, the tubular arrangement define the polygon 50 (a square). In the embodiment, the fluid 100 may flow in the channel configured between the inner wall 351 and the outer wall 352. Herein such channel is also referred to as (square) annulus 137. As an alternative of the depicted embodiment, the tubular reactor 130 may also be defined by a plurality parallel tubes 32, together defining the reactor 30 (not depicted). The tube axis A2 of the plurality of tubes 32 (as well as the tube axis of the double walled tube 32) may especially also be configured parallel to the tubular arrangement axis A1. Yet, in embodiments, the plurality of tubes 32 in such embodiment may be configured at an angle with respect to the tubular arrangement axis A1. Such angle is especially an acute angle. Herein, the tubular arrangement 1130 of the double walled tube 32 or the (alternative) one described above comprising the plurality of tubes 32 is also named a straight tubular arrangement 1132.

The photoreactor assembly 1 described herein may be used for treating the fluid 100 with light source radiation 11. During use, the fluid 100 is provided in the reactor 30 and irradiated with the light source radiation 11. The method may comprise a batch process. Yet, the method may especially comprise a continuous process. During the continuous process, the fluid 100 is transported through the reactor 30 while irradiating the fluid 100 with the light source radiation 11. Simultaneously a cooling fluid 91 may be transported through and/or along one or more cooling elements 95 as is schematically depicted in Fig. 5.

Hence, the invention provides embodiments of a reactor 30 with light sources 10 that can easily be replaced (for instance when a certain reaction needs a specific wavelength region), and may have a very high efficiency, both in terms of light/radiation output versus power input of the source, and in capturing of the radiation by the reactants. In embodiments, the assembly 1 comprises a hexagonal enclosure formed by six or eight light source elements 19 comprising a heatsink 2, each carrying one or more COBs. The heatsinks 2 may especially facilitate cooling of the light sources 10 and maintaining the COB 10 at a low temperature (for maximum efficiency).

In embodiments, a COB 10 (with or without phosphor) and/or an array of LEDs 10 (not necessarily of the same type) is configured on a heatsink 2 that is big enough to keep the COB 10 or LEDs 10 at a low temperature. For instance, three to ten of such heatsinks 2 (configured as light source elements 19) are slit into a frame 80 in such a way that they form a polygonal structure 50 /enclosure. The fluid 100 containing (photosensitive) reactants may be flown through a tiny tube 32 that is coiled around a core comprising a body support 45 with the same polygonal shape 50 (in embodiments with rounded edges to prevent damaging of the tube 32 while coiling, taking the minimum bending radius of the tube into account, depending on the tube diameter). The core 45 and tube 32 may in embodiments be placed in the enclosure from top or bottom side. The coiled tube 32 especially extends over the whole height of the enclosure, so all radiation 11 radiated by the sources 10 may imping on the coiled tube 32, and especially no light source radiation 11 will escape from top or bottom, or imping on other parts of the enclosure.

Optical simulations have shown that with a hexagonal core 45 and a hexagonal light source arrangement 1010 the efficiency is increased by 10% compared to a hexagonal light source arrangement 1010 and a round core 45 with a diameter equal to the smallest size of the hexagon 50. The efficiency may especially be improved when the core 45 has the same polygonal shape 50 as the enclosure. The efficiency increase gradually declines with increasing number of edges 59 of the polygonal shape 50 and is a few percent or less for eight or more edges 59. The efficiency may in embodiments further may be increased by minimizing a distance between the tubular arrangement 1130 and the light source arrangement 1010. The heatsinks 2,19 with the LEDs 10 can be replaced easily, for instance to change the wavelength region.

The tubular reactor may be configured in a tubular arrangement. For example, the tubular arrangement may comprise a coiled tubular arrangement, wherein the tubular reactor is helically coiled. Another example is that the tubular reactor may comprise an inner reactor wall and an outer reactor wall, together defining the tubular reactor, wherein one or more of the inner reactor wall and the outer reactor wall is transmissive for the light source radiation, and wherein the tubular arrangement comprises a straight tubular arrangement.

In the embodiments described above, the expression "thermal contact" may (mainly) relate conduction and/or convection. The expression "thermal contact" may relate to direct thermal contact and/or indirect thermal contact. Preferably, the thermal contact is at least or mainly via conduction as it provides optimal thermal management i.e. cooling. Preferably, the thermal contact is direct thermal contact.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

## Claims

1. A photoreactor assembly (1) comprising a reactor (30), wherein the reactor (30) is configured for hosting a fluid (100) to be treated with light source radiation (11) selected from one or more of UV radiation, visible radiation, and IR radiation, wherein the reactor (30) comprises a reactor wall (35) which is transmissive for the light source radiation (11), wherein:
- the reactor (30) is a tubular reactor (130), and wherein the reactor wall (35) defines the tubular reactor (130);
- the tubular reactor (130) is configured in a coiled tubular arrangement (1130, 1131);
- the photoreactor assembly (1) further comprises a light source arrangement (1010) comprising a plurality of light sources (10) configured to generate the light source radiation (11), wherein the reactor wall (35) is configured in a radiation receiving relationship with the plurality of light sources (10); and
- wherein the coiled tubular arrangement (1130, 1131) and the light source arrangement (1010) both define polygons (50) having mutually parallel configured polygon sides (59);
- wherein the plurality of light sources (10) comprise Chips-on-Board light sources (COB) and/or an array of Light emitting diodes (LEDs).

2. The photoreactor arrangement (1) according to claim 1, wherein the tubular reactor (130) is helically coiled.

3. The photoreactor assembly (1) according to any one of the preceding claims, wherein the coiled tubular arrangement (1130) and the light source arrangement (1010) both define polygons (50) having mutually parallel configured polygon sides (59), and wherein the polygons (50) each comprise 4-10 polygon sides (59).

4. The photoreactor assembly (1) according to any one of the preceding claims, wherein at least a first subset of the plurality of light sources (10) enclose the coiled tubular arrangement (1130).

5. The photoreactor assembly (1) according to any one of the preceding claims, wherein at least a second subset of the plurality of light sources (10) are enclosed by the coiled tubular arrangement (1130).

6. The photoreactor assembly (1) according to any one of the preceding claims, wherein the photoreactor assembly (1) comprises one or more cooling elements (95), wherein the one or more cooling elements (95) comprise one or more of (i) one or more fluid transport channels (7) and (ii) one or more thermally conductive elements (2), wherein the one or more cooling elements (95) are in conductive thermal contact with one or more of (a) the reactor (30) and (b) one or more of the light sources (10).

7. The photoreactor assembly (1) according to any one of the preceding claims, further comprising a reactor support element (40) configured to support the reactor (30), wherein the reactor support element (40) comprises a support body (45), wherein the support body (45) is rotational symmetrical, wherein at least part of the tubular reactor (130) is configured in conductive thermal contact with the support body (45) and wherein one or more thermally conductive elements (2) are comprised by the support body (45) or are in conductive thermal contact with the support body (45).

8. The photoreactor assembly (1) according to any one of the preceding claims, wherein the photoreactor assembly (1) comprises a number of light source elements (19); wherein each light source element (19) comprises one or more of the plurality of light sources (10), wherein each of the light source elements (19) comprises at least one thermally conductive element (2) configured in conductive thermal contact with the light source (10), wherein the light source element (19) comprises a reflective element (1011) at a surface (190) of the light source element (19) facing the reactor wall (35), wherein the reflective element (1011) is reflective for the light source radiation (11), wherein the tubular reactor (130) and the light source elements (19) define one or more fluid transport channels (7) between the tubular reactor (130) and the light source elements (19), wherein a minimal distance between the tubular reactor (130) and the light source elements (19) defines a fluid transport channel width (d), wherein the fluid transport channel width (d) is selected from the range of 1-5 mm.

9. The photoreactor assembly (1) according to claim 8, wherein the photoreactor assembly (1) further comprises light source element receiving elements (80), wherein the light source element receiving elements (80) are configured to removably house the light source elements (19).

10. The photoreactor assembly (1) according to any one of the preceding claims, wherein the photoreactor assembly (1) further comprises a wall (4) enclosing the tubular reactor (130) and the light source elements (19), wherein the wall (4) has a reflective surface (5) facing the tubular reactor (130), wherein the reflective surface (5) is reflective for the light source radiation (11).

11. The photoreactor assembly (1) according to any one of the preceding claims, wherein the photoreactor assembly (1) comprises the one or more cooling elements (95) according to claim 7, wherein the photoreactor assembly (1) further comprises a cooling system (90) configured for transporting a cooling fluid (91) through and/or along one or more of the one or more cooling elements (95), wherein (i) the cooling system (90) comprises an air transporting device (95) and/or (ii) the cooling system (90) comprises a pump configured to pump a liquid (93).

12. A method for treating a fluid (100) with light source radiation (11), wherein the method comprises:
- providing the photoreactor assembly (1) according to any one of the preceding claims;
- providing the fluid (100) to be treated with the light source radiation (11) in the reactor (30); and
- irradiating the fluid (100) with the light source radiation (11).

13. The method according to claim 12, comprising transporting the fluid (100) through the reactor (30) while irradiating the fluid (100) with the light source radiation (11), and transporting a cooling fluid (91) through and/or along one or more cooling elements (95) according to any one of claims 7 and 12.

## Patentansprüche

1. Photoreaktorbaugruppe (1), umfassend einen Reaktor (30), wobei der Reaktor (30) zum Beherbergen eines Fluids (100) konfiguriert ist, das mit einer Lichtquellenstrahlung (11) behandelt werden soll, die aus einer oder mehreren von UV-Strahlung, sichtbarer Strahlung und IR-Strahlung ausgewählt ist, wobei der Reaktor (30) eine Reaktorwand (35) umfasst, die für die Lichtquellenstrahlung (11) durchlässig ist, wobei:
- der Reaktor (30) ein Rohrreaktor (130) ist und wobei die Reaktorwand (35) den Rohrreaktor (130) definiert;
- der Rohrreaktor (130) in einer gewickelten Rohranordnung (1130, 1131) konfiguriert ist;
- wobei die Photoreaktorbaugruppe (1) ferner eine Lichtquellenanordnung (1010) umfasst, umfassend eine Vielzahl von Lichtquellen (10), die konfiguriert sind, um die Lichtquellenstrahlung (11) zu erzeugen, wobei die Reaktorwand (35) in einer strahlungsaufnehmenden Beziehung mit der Vielzahl von Lichtquellen (10) konfiguriert ist; und
- wobei die gewickelte Rohranordnung (1130, 1131) und die Lichtquellenanordnung (1010) beide Polygone (50) definieren, die zueinander parallel konfigurierte Polygonseiten (59) aufweisen;
- wobei die Vielzahl von Lichtquellen (10) Chips-on-Board-Lichtquellen (COB) und/oder ein Array von lichtemittierenden Dioden (LEDs) umfassen.

2. Photoreaktoranordnung (1) nach Anspruch 1, wobei der Rohrreaktor (130) spiralförmig gewickelt ist.

3. Photoreaktorbaugruppe (1) nach einem der vorstehenden Ansprüche, wobei die gewickelte Rohranordnung (1130) und die Lichtquellenanordnung (1010) beide Polygone (50) definieren, die zueinander parallel konfigurierte Polygonseiten (59) aufweisen, und wobei die Polygone (50) jeweils 4-10 Polygonseiten (59) umfassen.

4. Photoreaktorbaugruppe (1) nach einem der vorstehenden Ansprüche, wobei mindestens eine erste Teilmenge der Vielzahl von Lichtquellen (10) die gewickelte Rohranordnung (1130) umschließt.

5. Photoreaktorbaugruppe (1) nach einem der vorstehenden Ansprüche, wobei mindestens eine zweite Teilmenge der Vielzahl von Lichtquellen (10) durch die gewickelte Rohranordnung (1130) umschlossen ist.

6. Photoreaktorbaugruppe (1) nach einem der vorstehenden Ansprüche, wobei die Photoreaktorbaugruppe (1) ein oder mehrere Kühlelemente (95) umfasst, wobei das eine oder die mehreren Kühlelemente (95) eines oder mehrere von (i) einem oder mehreren Fluidtransportkanälen (7) und (ii) einem oder mehreren thermisch leitfähigen Elementen (2) umfassen, wobei das eine oder die mehreren Kühlelemente (95) in leitfähigem thermischen Kontakt mit einem oder mehreren von (a) dem Reaktor (30) und (b) einer oder mehreren der Lichtquellen (10) stehen.

7. Photoreaktorbaugruppe (1) nach einem der vorstehenden Ansprüche, ferner umfassend ein Reaktorträgerelement (40), das konfiguriert ist, um den Reaktor (30) zu tragen, wobei das Reaktorträgerelement (40) einen Trägerkörper (45) umfasst, wobei der Trägerkörper (45) rotationssymmetrisch ist, wobei mindestens ein Teil des Rohrreaktors (130) in leitfähigem thermischen Kontakt mit dem Trägerkörper (45) konfiguriert ist und wobei ein oder mehrere thermisch leitfähige Elemente (2) durch den Trägerkörper (45) umfasst sind oder in leitfähigem thermischen Kontakt mit dem Trägerkörper (45) stehen.

8. Photoreaktorbaugruppe (1) nach einem der vorstehenden Ansprüche, wobei die Photoreaktorbaugruppe (1) eine Anzahl von Lichtquellenelementen (19) umfasst; wobei jedes Lichtquellenelement (19) eine oder mehrere der Vielzahl von Lichtquellen (10) umfasst, wobei jedes der Lichtquellenelemente (19) mindestens ein thermisch leitfähiges Element (2) umfasst, das in einem leitfähigen thermischen Kontakt mit der Lichtquelle (10) konfiguriert ist, wobei das Lichtquellenelement (19) ein reflektierendes Element (1011) an einer Oberfläche (190) des Lichtquellenelements (19) umfasst, das der Reaktorwand (35) zugewandt ist, wobei das reflektierende Element (1011) für die Lichtquellstrahlung (11) reflektierend ist, wobei der Rohrreaktor (130) und die Lichtquellenelemente (19) einen oder mehrere Fluidtransportkanäle (7) zwischen dem Rohrreaktor (130) und den Lichtquellenelementen (19) definieren, wobei ein Mindestabstand zwischen dem Rohrreaktor (130) und den Lichtquellenelementen (19) eine Fluidtransportkanalbreite (d) definiert, wobei die Fluidtransportkanalbreite (d) aus dem Bereich von 1-5 mm ausgewählt ist.

9. Photoreaktorbaugruppe (1) nach Anspruch 8, wobei die Photoreaktorbaugruppe (1) ferner Lichtquellenelementaufnahmeelemente (80) umfasst, wobei die Lichtquellenelementaufnahmeelemente (80) konfiguriert sind, um die Lichtquellenelemente (19) abnehmbar zu empfangen.

10. Photoreaktorbaugruppe (1) nach einem der vorstehenden Ansprüche, wobei die Photoreaktorbaugruppe (1) ferner eine Wand (4) umfasst, die den Rohrreaktor (130) und die Lichtquellenelemente (19) umschließt, wobei die Wand (4) eine reflektierende Oberfläche (5) aufweist, die dem Rohrreaktor (130) zugewandt ist, wobei die reflektierende Oberfläche (5) für die Lichtquellenstrahlung (11) reflektierend ist.

11. Photoreaktorbaugruppe (1) nach einem der vorstehenden Ansprüche, wobei die Photoreaktorbaugruppe (1) das eine oder die mehreren Kühlelemente (95) nach Anspruch 7 umfasst, wobei die Photoreaktoranordnung (1) ferner ein Kühlsystem (90) umfasst, das zum Transportieren eines Kühlfluids (91) durch und/oder entlang eines oder mehrerer des einen oder der mehreren Kühlelemente (95) konfiguriert ist, wobei (i) das Kühlsystem (90) eine Lufttransportvorrichtung (95) umfasst und/oder (ii) das Kühlsystem (90) eine Pumpe umfasst, die konfiguriert ist, um eine Flüssigkeit (93) zu pumpen.

12. Verfahren zum Behandeln eines Fluids (100) mit Lichtquellenstrahlung (11), wobei das Verfahren umfasst:
- Bereitstellen der Photoreaktorbaugruppe (1) nach einem der vorstehenden Ansprüche;
- Bereitstellen des Fluids (100), das mit der Lichtquellenstrahlung (11) in dem Reaktor (30) behandelt werden soll; und
- Bestrahlen des Fluids (100) mit der Lichtquellenstrahlung (11).

13. Verfahren nach Anspruch 12, umfassend das Transportieren des Fluids (100) durch den Reaktor (30), während das Fluid (100) mit der Lichtquellenstrahlung (11) bestrahlt wird, und Transportieren eines Kühlfluids (91) durch und/oder entlang eines oder mehrerer Kühlelemente (95) nach einem der Ansprüche 7 und 12.

## Revendications

1. Ensemble de photoréacteur (1) comprenant un réacteur (30), dans lequel le réacteur (30) est conçu pour héberger un fluide (100) à traiter avec un rayonnement de source de lumière (11) choisi parmi un ou plusieurs d'un rayonnement UV, d'un rayonnement visible et d'un rayonnement IR, dans lequel le réacteur (30) comprend une paroi de réacteur (35) qui est transmissive pour le rayonnement de source de lumière (11), dans lequel :
- le réacteur (30) est un réacteur tubulaire (130), et dans lequel la paroi de réacteur (35) définit le réacteur tubulaire (130) ;
- le réacteur tubulaire (130) est conçu dans un agencement tubulaire enroulé (1130, 1131) ;
- l'ensemble de photoréacteur (1) comprend en outre un agencement de source de lumière (1010) comprenant une pluralité de sources de lumière (10) conçues pour générer le rayonnement de source de lumière (11), dans lequel la paroi de réacteur (35) est conçue dans une relation de réception de rayonnement avec la pluralité de sources de lumière (10) ; et
- dans lequel l'agencement tubulaire enroulé (1130, 1131) et l'agencement de source de lumière (1010) définissent tous deux des polygones (50) ayant des côtés polygonaux conçus de manière réciproquement parallèle (59) ;
- dans lequel la pluralité de sources de lumière (10) comprennent des sources de lumière de puce sur carte (COB) et/ou un réseau de diodes électroluminescentes (DEL).

2. Agencement de photoréacteur (1) selon la revendication 1, dans lequel le réacteur tubulaire (130) est enroulé en hélice.

3. Ensemble de photoréacteur (1) selon l'une quelconque des revendications précédentes, dans lequel l'agencement tubulaire enroulé (1130) et l'agencement de source de lumière (1010) définissent tous deux des polygones (50) ayant des côtés polygonaux conçus de manière réciproquement parallèle (59), et dans lequel les polygones (50) comprennent chacun 4 à 10 côtés polygonaux (59).

4. Ensemble de photoréacteur (1) selon l'une quelconque des revendications précédentes, dans lequel au moins un premier sous-ensemble de la pluralité de sources de lumière (10) entoure l'agencement tubulaire enroulé (1130).

5. Ensemble de photoréacteur (1) selon l'une quelconque des revendications précédentes, dans lequel au moins un second sous-ensemble de la pluralité de sources de lumière (10) sont entourées par l'agencement tubulaire enroulé (1130).

6. Ensemble de photoréacteur (1) selon l'une quelconque des revendications précédentes, dans lequel l'ensemble de photoréacteur (1) comprend un ou plusieurs éléments de refroidissement (95), le ou les éléments de refroidissement (95) comprenant un ou plusieurs parmi (i) un ou plusieurs canaux de transport de fluide (7) et (ii) un ou plusieurs éléments thermiquement conducteurs (2), le ou les éléments de refroidissement (95) étant en contact thermique conducteur avec un ou plusieurs parmi (a) le réacteur (30) et (b) une ou plusieurs des sources de lumière (10).

7. Ensemble de photoréacteur (1) selon l'une quelconque des revendications précédentes, comprenant en outre un élément de support de réacteur (40) conçu pour supporter le réacteur (30), dans lequel l'élément de support de réacteur (40) comprend un corps de support (45), dans lequel le corps de support (45) est rotatif symétrique, dans lequel au moins une partie du réacteur tubulaire (130) est conçue en contact thermique conducteur avec le corps de support (45) et dans lequel un ou plusieurs éléments thermiquement conducteurs (2) sont compris par le corps de support (45) ou sont en contact thermique conducteur avec le corps de support (45).

8. Ensemble de photoréacteur (1) selon l'une quelconque des revendications précédentes, dans lequel l'ensemble de photoréacteur (1) comprend un certain nombre d'éléments de source de lumière (19) ; dans lequel chaque élément de source de lumière (19) comprend une ou plusieurs de la pluralité de sources de lumière (10), dans laquelle chacun des éléments de source de lumière (19) comprend au moins un élément thermiquement conducteur (2) conçu en contact thermique conducteur avec la source de lumière (10), dans laquelle l'élément de source de lumière (19) comprend un élément réfléchissant (1011) au niveau d'une surface (190) de l'élément de source de lumière (19) faisant face à la paroi de réacteur (35), dans laquelle l'élément réfléchissant (1011) est réfléchissant pour le rayonnement de source de lumière (11), dans lequel le réacteur tubulaire (130) et les éléments de source de lumière (19) définissent un ou plusieurs canaux de transport de fluide (7) entre le réacteur tubulaire (130) et les éléments de source de lumière (19), dans lesquels une distance minimale entre le réacteur tubulaire (130) et les éléments de source de lumière (19) définit une largeur de canal de transport de fluide (d), dans laquelle la largeur de canal de transport de fluide (d) est choisie parmi la plage de 1 à 5 mm.

9. Ensemble de photoréacteur (1) selon la revendication 8, dans lequel l'ensemble de photoréacteur (1) comprend en outre des éléments de réception d'élément de source de lumière (80), dans lesquels les éléments de réception d'élément de source de lumière (80) sont conçus pour héberger de manière amovible les éléments de source de lumière (19).

10. Ensemble de photoréacteur (1) selon l'une quelconque des revendications précédentes, dans lequel l'ensemble de photoréacteur (1) comprend en outre une paroi (4) entourant le réacteur tubulaire (130) et les éléments de source de lumière (19), la paroi (4) ayant une surface réfléchissante (5) faisant face au réacteur tubulaire (130), la surface réfléchissante (5) étant réfléchissante pour le rayonnement de source de lumière (11).

11. Ensemble de photoréacteur (1) selon l'une quelconque des revendications précédentes, dans lequel l'ensemble de photoréacteur (1) comprend un ou plusieurs éléments de refroidissement (95) selon la revendication 7, dans lequel l'ensemble de photoréacteur (1) comprend en outre un système de refroidissement (90) conçu pour transporter un fluide de refroidissement (91) à travers et/ou le long d'un ou de plusieurs des un ou plusieurs éléments de refroidissement (95), dans lequel (i) le système de refroidissement (90) comprend un dispositif de transport d'air (95) et/ou (ii) le système de refroidissement (90) comprend une pompe conçue pour pomper un liquide (93).

12. Procédé destiné au traitement d'un fluide (100) avec un rayonnement de source de lumière (11), dans lequel le procédé comprend :
- la fourniture de l'ensemble de photoréacteur (1) selon l'une quelconque des revendications précédentes ;
- la fourniture du fluide (100) à traiter avec le rayonnement de source de lumière (11) dans le réacteur (30) ; et
- l'irradiation du fluide (100) avec le rayonnement de source de lumière (11).

13. Procédé selon la revendication 12, comprenant le transport du fluide (100) à travers le réacteur (30) tout en irradiant le fluide (100) avec le rayonnement de source de lumière (11), et le transport d'un fluide de refroidissement (91) à travers et/ou le long d'un ou de plusieurs éléments de refroidissement (95) selon l'une quelconque des revendications 7 et 12.
